# EUROPÄISCHE PATENTSCHRIFT

(11) **EP 2 387 660 B1**
(45) Veröffentlichungstag und Bekanntmachung des Hinweises auf die Patenterteilung: **09.11.2016**
(21) Anmeldenummer: 09795413.5
(22) Anmeldetag: 17.12.2009
(51) Int. Cl.: F02D 41/22, F02D 41/34, G01M 15/02

(54) **VERFAHREN ZUM DURCHFÜHREN EINER ANZAHL EINSPRITZUNGEN**
METHOD FOR PERFORMING A NUMBER OF INJECTIONS
PROCEDE D'EXECUTION D'UN CERTAIN NOMBRE D'INJECTIONS

(30) Priorität: 16.01.2009 DE 102009000265
(43) Veröffentlichungstag der Anmeldung: 23.11.2011
(73) Patentinhaber: Robert Bosch GmbH, 70442 Stuttgart (DE)
(72) Erfinder: MAAS, Joerg, 71686 Remseck (DE); SCHEMPP, Stefan, 73249 Wernau (DE)
(86) Internationale Anmeldenummer: PCT/EP2009/067381
(87) Internationale Veröffentlichungsnummer: WO 2010/081607

(56) Entgegenhaltungen:
- WO-A1-00/19090
- DE-A1- 10 131 925
- GB-A- 2 061 379
- US-A- 6 032 642

## Beschreibung

Die Erfindung betrifft ein Verfahren zum Durchführen einer Anzahl Einspritzungen, ein Verfahren zum Testen einer Funktion einer Einspritzanlage eines Verbrennungsmotors, eine Vorrichtung, die dazu ausgebildet ist, für mindestens einen Zylinder eines Verbrennungsmotors eine Anzahl Einspritzungen durchzuführen, eine Anordnung zum Testen einer Funktion einer Einspritzanlage eines Verbrennungsmotors, ein Computerprogramm und ein Computerprogrammprodukt.

### Stand der Technik

Durch die Gesetzgebung zu einer in einem Fahrzeug integrierten Diagnose, der sog. On-Board-Diagnose (OBD), werden Überwachungsfunktionen im Steuergerät implementiert, deren Aufgabe es ist, die Einhaltung von Betriebsparametern über die Lebensdauer des Fahrzeugs zu überwachen. Dabei wird u. a. überprüft, ob die Betriebsparameter möglicherweise zulässige Toleranzwerte überschreiten.

Die Wirksamkeit dieser Überwachungen muss bspw. vor einer Behörde, wie der Luftreinhaltungskommission Kaliforniens (California Air Resources Board, CARB) demonstriert werden. Es ist vorgesehen, dass einige der vorgesehenen Überwachungsfunktionen auf ein verzögertes Öffnen einer Einspritzanlage bzw. eines Injektors im Vergleich zu dem regulär vorgesehenen Sollöffnungszeitpunkt reagieren.

Zur Durchführung eines Tests zum Überprüfen dieser Überwachungsfunktionen gibt es zwei Möglichkeiten, dieses verzögerte Öffnen herbeizuführen. So ist es möglich, in ein zu testendes Fahrzeug einen gealterten Injektor einzubauen, der genau das gewünschte Verhalten zeigt. Allerdings ist diese Variante schwer umzusetzen, da ein entsprechender Injektor schwer zu beschaffen oder herzustellen ist. Alternativ ist die Verwendung eines entsprechenden Bauteils zur Verzögerung des Ansteuersignals in der Injektorleitung denkbar. Allerdings muss dieses Bauteil nach Durchführung des Tests wieder entfernt werden. Die US2008269980 offenbart ein solches Bauteil.

### Offenbarung der Erfindung

Die Erfindung betrifft ein Verfahren zum Durchführen einer Anzahl Einspritzungen für mindestens einen Zylinder eines Verbrennungsmotors. Dabei wird für den mindestens einen Zylinder ein Sollzeitpunkt für einen Ansteuerbeginn einer Einspritzung ermittelt und ein Zielzeitpunkt für den Ansteuerbeginn aus dem Sollzeitpunkt zuzüglich einer Verzögerungszeit bestimmt. In der GB 2 061 379 wird dies für zur gezielten Reduktion des Motorgeräusches verwendet.

Mit dem Verfahren wird die Einspritzung typischerweise an dem Zielzeitpunkt, der gegenüber dem Sollzeitpunkt um die Verzögerungszeit verzögert ist, durchgeführt. Durch das Verfahren ist es möglich, den Betrieb des Verbrennungsmotors hinsichtlich der Durchführung von Einspritzungen zu kontrollieren und demnach zu regeln und/oder zu steuern.

Mit dem Verfahren kann in Ausgestaltung eine Funktion zur Überwachung eines Betriebs des Verbrennungsmotors aktiviert werden, so dass mit dem Verfahren ein Test der Funktion des Verbrennungsmotors durchgeführt werden kann. Dies betrifft bspw. eine Funktion, die auf einen verzögerten Ansteuerbeginn reagiert bzw. anspricht. Zur Durchführung eines Tests der Funktion wird die Verzögerung gezielt herbeigeführt, um nachzuweisen, dass die Funktion korrekt reagiert. Bei einem Standardbetrieb des Verbrennungsmotors wird die Funktion bei einem betriebsbedingten Vorliegen einer Verzögerung des Ansteuerbeginns aktiviert. Die Verzögerung kann sich bspw. bei Vorliegen eines Fehlers im Ablauf einer Einspritzung oder aufgrund von Verschleiß des Verbrennungsmotors oder zumindest einer Komponente des Verbrennungsmotors ereignen.

Die bspw. im Rahmen der Überwachung vorgesehene Verschiebung des Ansteuerbeginns kann bedarfsweise unter Eingabe eines hierfür vorgesehenen Befehls in ein Steuergerät, das mit dem Verbrennungsmotor zusammenwirkt, durchgeführt werden. Das Verfahren kann weiterhin softwaregestützt ausgeführt werden.

Bei dem vorgestellten Verfahren wird in Ausgestaltung nur der Ansteuerbeginn verändert. Für eine Ansteuerdauer und somit eine Dauer der Ansteuerung wird eine übliche, unveränderte Sollansteuerdauer verwendet. Folglich wird als ein Betriebsparameter in Ausgestaltung eine Dauer der Verzögerungszeit eingestellt. Es ist jedoch auch möglich, im Rahmen des Verfahrens andere Betriebsparameter und somit auch eine Sollansteuerdauer je nach Bedarf zu modifizieren, um somit veränderte Abläufe von Einspritzungen herbeizuführen. Typischerweise werden in Ausgestaltung des Verfahrens zu Testzwecken fehlerhafte Einspritzungen, die sich u. a. durch eine Verschiebung des Ansteuerbeginns ergeben, ausgelöst.

Unabhängig von einer vorgesehenen Verzögerung des Ansteuerbeginns wird der Sollzeitpunkt für den Ansteuerbeginn in Abhängigkeit eines Winkels relativ zu einem oberen Totpunkt des Kolbens, der einem Zylinder zugeordnet ist, für die durchzuführende Einspritzung berechnet.

Die Erfindung betrifft auch ein Verfahren zum Testen einer Funktion einer Einspritzanlage eines Verbrennungsmotors, bei dem mindestens eine Einspritzung durch ein voranstehend beschriebenes Verfahren durchgeführt wird. Die Einspritzanlage umfasst bspw. eine Anzahl Einspritzventile sowie ein mit diesen Einspritzventilen zusammenwirkendes Steuergerät.

Die dargelegte Vorrichtung ist dazu ausgebildet, für mindestens einen Zylinder eines Verbrennungsmotors einer Anzahl Einspritzungen durchzuführen und somit u. a. zu kontrollieren. Hierzu ist die Vorrichtung dazu ausgebildet, für den mindestens einen Zylinder einen Sollzeitpunkt für einen Ansteuerbeginn einer Einspritzung zu ermitteln und einen Zielzeitpunkt für den Ansteuerbeginn aus dem Sollzeitpunkt zuzüglich einer Verzögerungszeit zu bestimmen.

Die weiterhin erfindungsgemäß vorgesehene Anordnung zum Testen einer Funktion einer Einspritzanlage eines Verbrennungsmotors weist mindestens eine beschriebene, erfindungsgemäße Vorrichtung auf, die dazu ausgebildet ist, für mindestens einen Zylinder eines Verbrennungsmotors einer Anzahl Einspritzungen durchzuführen.

Die im Rahmen der Erfindung durchführbare softwaregestützte Bereitstellung der Verzögerung ist jederzeit verfügbar und erzeugt keine Zusatzkosten. Außerdem kann die Verzögerungszeit exakt sowie nach Anforderung bedarfsgerecht eingestellt werden. Üblicherweise kann mit dem Verfahren durch Einrichten der Verzögerungszeit eine Offset-Verschiebung der Einspritzlage zum Nachweis einer Funktion einer ON-Board-Diagnose (OBD) erreicht werden.

Mit der Erfindung ist es in einer Ausführung möglich, über einen Tester und/oder über eine Anwendung bzw. Applikation als Komponenten einer Ausführungsform der erfindungsgemäßen Anordnung eine Schnittstelle in der Software des Steuergeräts über einen Feldbus, bspw. einen CAN-Bus, anzusteuern. Damit kann für ein ausgewähltes Einspritzventil für einen ausgewählten Injektor der Ansteuerbeginn unter Aufrechterhaltung der Ansteuerdauer zeitlich verschoben werden, wobei eine Neutralität einer Menge des einzuspritzenden Kraftstoffs bei unveränderter Einspritzdauer eingehalten wird. Bei einer Umsetzung der Erfindung können auch sämtliche Einspritzungen für den ausgewählten Zylinder verschoben werden.

Die beschriebene Vorrichtung ist dazu ausgebildet, sämtliche Schritte des vorgestellten Verfahrens durchzuführen. Dabei können einzelne Schritte dieses Verfahrens auch von einzelnen Komponenten der Vorrichtung durchgeführt werden. Weiterhin können Funktionen der Vorrichtung oder Funktionen von einzelnen Komponenten der Vorrichtung als Schritte des Verfahrens umgesetzt werden. Außerdem ist es möglich, dass Schritte des Verfahrens als Funktionen einzelner Komponenten der Vorrichtung oder der gesamten Vorrichtung realisiert werden.

Die Erfindung betrifft weiterhin ein Computerprogramm mit Programmcodemitteln, um alle Schritte eines beschriebenen Verfahrens durchzuführen, wenn das Computerprogramm auf einem Computer oder einer entsprechenden Recheneinheit, insbesondere in einer erfindungsgemäßen Vorrichtung, ausgeführt wird.

Das erfindungsgemäße Computerprogrammprodukt mit Programmcodemitteln, die auf einem computerlesbaren Datenträger gespeichert sind, ist zum Durchführen aller Schritte eines beschriebenen Verfahrens ausgebildet, wenn das Computerprogramm auf einem Computer oder einer entsprechenden Recheneinheit, insbesondere in einer erfindungsgemäßen Vorrichtung, ausgeführt wird.

In der Bildung eines Einspritzverlaufs wird für mindestens einen Einspritztyp, bspw. für Vor-, Haupt- und/oder Nacheinspritzungen, unabhängig von einem im Rahmen des Verfahrens in seiner Funktion zu beeinflussenden Zylinder ein Ansteuerbeginn berechnet, der sich aus einem Winkel relativ zum oberen Totpunkt und/oder zur Haupteinspritzung und einer darauf bezogenen Verzögerungs- bzw. Offsetzeit zusammensetzt.

Der üblicherweise vorgesehene Sollzeitpunkt wird in einer sogenannten statischen Unterbrechung für jeden Zylinder und Einspritztyp programmiert. Ein im Rahmen des Verfahrens zu untersuchender Zylinder kann über eine Testerschnittstelle ausgewählt werden. In einer statistischen Unterbrechung, können ein interner Zylinderzähler und ein Zylinderauswahlwert denselben Wert annehmen. Außerdem wird der eigentliche Sollzeitpunkt im Winkel-Zeit-Paar jeder Ansteuerung vor der Übergabe eines Zielzeitpunkts an einen Co-Prozessor um einen Zylinderauswahlwert beaufschlagt, der ebenfalls über eine Testerschnittstelle vorgeben werden kann. Danach erfolgt die Programmierung des Ansteuerbeginns. Bei einer Anwendung des Verfahrens kann eine vorgesehene Funktion über die Testerschnittstelle ausgewählt und parametrisiert sowie aktiv geschaltet werden.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Kurze Beschreibung der Zeichnungen
Figur 1 zeigt in schematischer Darstellung ein Schaltbild zur Durchführung einer Ausführungsform des erfindungsgemäßen Verfahrens.
Figur 2 zeigt in schematischer Darstellung eine Ausführungsform einer erfindungsgemäßen Anordnung, die eine Ausführungsform einer erfindungsgemäßen Vorrichtung umfasst.

### Ausführungsformen der Erfindung

Die Erfindung ist anhand von Ausführungsformen in den Zeichnungen schematisch dargestellt und wird nachfolgend unter Bezugnahme auf die Zeichnungen ausführlich beschrieben.

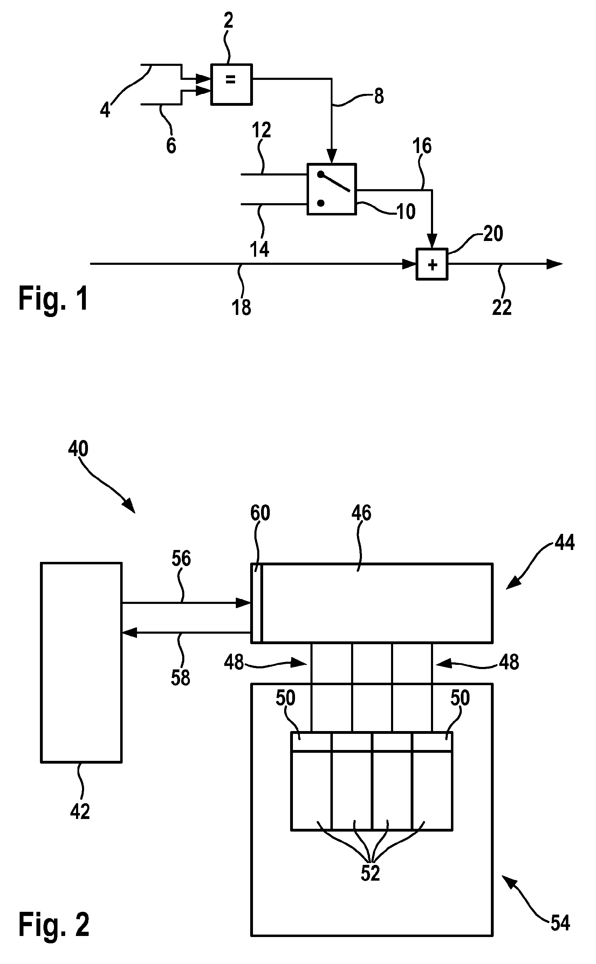

In dem zur Beschreibung einer Ausführungsform des Verfahrens vorgesehenen Schaltbild aus Figur 1 erfolgt zunächst ein Vergleich 2 eines Auswahlwerts 4 InjVlv_ctCylOffsetRemote-C für einen Zylinder mit einem Zählwert 6 Epm_ctCy eines internen Zylinderzählers. Ein Zwischenwert 8 wird als Ergebnis dieses Vergleichs 2 einem Auswahlmodul 10 zugeführt. Weiterhin wird diesem Auswahlmodul entweder der Wert null 12 oder ein Zylinderauswahlwert 14 InjVlv_tiOffsetRemote_C zugeführt. Als Ergebnis einer durch das Auswahlmodul 10 durchgeführten Auswahl wird eine Verzögerungszeit 16 bereitgestellt, die einem Sollzeitpunkt 18 InjVlv_tiDes xxx für eine Ansteuerung eines Zylinders zugeführt wird, woraus sich durch Addition 20 ein Zielzeitpunkt 22 für einen Ansteuerbeginn berechnet.

Der Sollzeitpunkt 18 wird in sogenannten statischen Unterbrechungen bzw. einem statischen Interrupt für jeden Zylinder und jeden Einspritztyp programmiert und dann durch einen Co-Prozessor im Microcontroller entsprechend in eine Ansteuerung umgesetzt.

Über eine Testerschnittstelle kann folglich ein bestimmter Zylinder über den Zylinderauswahlwert 14 InjVlv_ctCylOffsetRemote_C ausgewählt werden. In den statischen Unterbrechungen bzw. Interrupts, in denen ein interner Zylinderzähler denselben Zählerwert 6 Epm_ctCyl, wie bei der Zylinderauswahlwert 14 injVIV_ctCylOffsetRemote_C annimmt, wird der eigentliche Sollzeitpunkt 18 InjVlv_tiDes xxx bestimmt, wobei "xxx" als Platzhalter für verschiedene Einspritztypen stehen. Ein Winkel-Zeit-Paar für jede Ansteuerung wird vor der Übergabe des Werts an den CoProzessor um den Zylinderauswahlwert 14 InjVlv_tiOffsetRemote_C beaufschlagt, der ebenfalls über die Testerschnittstelle vorgeben werden kann. Danach erfolgt die Programmierung des Ansteuerbeginns. Hierbei wird dem Sollzeitpunkt 18 die Verzögerungszeit 16 hinzuaddiert und somit der Zielzeitpunkt 22 berechnet. Bei einer Anwendung des Verfahrens kann eine vorgesehene Funktion über eine Schnittstelle eines Steuergeräts ausgewählt und parametrisiert sowie aktiv geschaltet werden.

Die in Figur 2 schematisch dargestellte Ausführungsform einer erfindungsgemäßen Anordnung 40 umfasst eine Testeinrichtung 42 sowie eine Ausführungsform einer erfindungsgemäßen Vorrichtung 44, die dazu ausgebildet ist, für mindestens einen Zylinder 52 eines Verbrennungsmotors 54 eine Anzahl Einspritzungen durchzuführen. Diese Vorrichtung 44 umfasst ein Steuergerät 46 sowie in der vorliegenden Ausführungsform vier Zuleitungen 48, über die das Steuergerät 46 mit ebenfalls vier Einspritzventilen 50 verbunden sind. Dabei ist jedes Einspritzventil 50 einem Zylinder 52 des Verbrennungsmotors 54 zugeordnet. Bei einem herkömmlichen Betrieb des Verbrennungsmotors 54 steuert das Steuergerät 46 Funktionsabläufe der Einspritzventile 50, wobei den Einspritzventilen 50 über die Zuleitungen 48 entsprechende Befehle übermittelt werden.

Von dem Steuergerät 46 der Vorrichtung 44 sind unterschiedliche Funktionen implementiert, bei deren Umsetzung ein reibungsloser Verlauf eines Betriebs des Verbrennungsmotors 54 ermöglicht wird.

Bei der vorliegenden Ausführungsform der erfindungsgemäßen Vorrichtung ist vorgesehen, dass diese für mindestens einen Zylinder eines Verbrennungsmotors eine Anzahl Einspritzungen durchführt. Dabei wird, wie beim herkömmlichen Betrieb auch, für mindestens einen Zylinder 52 ein Sollzeitpunkt für einen Ansteuerbeginn einer Einspritzung ermittelt. Bei Umsetzung des erfindungsgemäßen Verfahrens ist weiterhin vorgesehen, dass durch die Vorrichtung 44 ein Zielzeitpunkt für den Ansteuerbeginn aus einem Sollzeitpunkt zuzüglich einer Verzögerungszeit bestimmt wird. Hierzu wird der Zielzeitpunkt, der von dem Sollzeitpunkt und der Verzögerungszeit abhängig ist, in dem Steuergerät 46 als eine Komponente der erfindungsgemäßen Vorrichtung berechnet. Bei Umsetzung des Verfahrens wird über jeweils eine Zuleitung 48 ein Einspritzventil 50, dass jenem Zylinder 52 zugeordnet ist, für den ein verzögerter Ansteuerbeginn durchgeführt werden soll, der Zielzeitpunkt übermittelt, so dass für den ausgewählten Zylinder 52 eine verzögerte Einspritzung erfolgt.

Das erfindungsgemäße Verfahren kann bspw. im Rahmen eines Tests des Steuergeräts 46 und/oder des Verbrennungsmotors 54 durchgeführt werden. Hierzu wird eine Schnittstelle 60 des Steuergeräts 46 mit dem Testgerät 42 über eine Zuleitung 56 und einer Rückleitung 58 verbunden. Ausgehend von dem Testgerät 42 wird dem Steuergerät 46 ein Befehl zur Umsetzung des Verfahrens übermittelt, den das Steuergerät 46 über die Schnittstelle 60, empfängt.

Es ist vorgesehen, dass bei einer Verzögerung einer Einspritzung eines Zylinders 52 eine in dem Steuergerät 46 implementierte Funktion zur Überwachung eines Betriebs des Verbrennungsmotors 54 aktiviert wird, wobei diese genannte Funktion die erfolgte Verzögerung nachweist. Falls die Verzögerung über die Funktion nachgewiesen wird, kann als Ergebnis dieser Nachweis über die Rückleitung 58 an das Testgerät 42 übergeben werden. Somit wird bei einer Umsetzung des erfindungsgemäßen Verfahrens überprüft, ob die Funktion zur Überwachung des Betriebs des Verbrennungsmotors 54, die in dem Steuergerät 46 implementiert ist, korrekt durchgeführt wird.

## Patentansprüche

1. Verfahren zum Durchführen einer Anzahl Einspritzungen für mindestens einen Zylinder (52) eines Verbrennungsmotors (54), bei dem für den mindestens einen Zylinder (52) ein Sollzeitpunkt (18) für einen Ansteuerbeginn einer Einspritzung ermittelt und ein Zielzeitpunkt (22) für den Ansteuerbeginn aus dem Sollzeitpunkt (18) zuzüglich einer Verzögerungszeit (16) bestimmt wird, wobei eine Funktion zur Überwachung des Verbrennungsmotors (54) auf einen verzögerten Ansteuerbeginn reagiert, wobei zur Durchführung eines Tests der Funktion eine Verzögerung gezielt herbeigeführt wird, um nachzuweisen, dass die Funktion korrekt reagiert, wobei eine Einspritzung an dem Zielzeitpunkt (22) durchgeführt wird.

2. Verfahren nach Anspruch 1, mit dem die Funktion zur Überwachung eines Betriebs des Verbrennungsmotors (54) aktiviert wird.

3. Verfahren nach Anspruch 1 oder 2, bei dem eine Verschiebung des Ansteuerbeginns unter Eingabe eines hierfür vorgesehenen Befehls durchgeführt wird.

4. Verfahren nach einem der voranstehenden Ansprüche, bei dem für eine Ansteuerdauer eine Sollansteuerdauer verwendet wird.

5. Verfahren nach einem der voranstehenden Ansprüche, bei dem eine Dauer der Verzögerungszeit (16) eingestellt wird.

6. Verfahren nach einem der voranstehenden Ansprüche, bei dem der Sollzeitpunkt (18) in Abhängigkeit eines Winkels relativ zu einem oberen Totpunkt für eine durchzuführende Einspritzung berechnet wird.

7. Verfahren zum Testen einer Funktion einer Einspritzanlage eines Verbrennungsmotors, bei dem mindestens eine Einspritzung durch ein Verfahren nach einem der voranstehenden Ansprüche durchgeführt wird.

8. Vorrichtung, die dazu ausgebildet ist, für mindestens einen Zylinder (52) eines Verbrennungsmotors (54) einer Anzahl Einspritzungen durchzuführen und dabei für den mindestens einen Zylinder (52) einen Sollzeitpunkt (18) für einen Ansteuerbeginn einer Einspritzung zu ermitteln sowie einen Zielzeitpunkt (22) für den Ansteuerbeginn aus dem Sollzeitpunkt (18) zuzüglich einer Verzögerungszeit (16) zu bestimmen, wobei eine Funktion zur Überwachung des Verbrennungsmotors (54) auf einen verzögerten Ansteuerbeginn reagiert, wobei zur Durchführung eines Tests der Funktion eine Verzögerung gezielt herbeigeführt wird, um nachzuweisen, dass die Funktion korrekt reagiert, und wobei die Vorrichtung (54) eine Einspritzung an dem Zielzeitpunkt (22) durchführt.

9. Anordnung zum Testen einer Funktion einer Einspritzanlage eines Verbrennungsmotors (54), die mindestens eine Vorrichtung (44) nach Anspruch 8 aufweist, die dazu ausgebildet ist, für mindestens einen Zylinder (52) eines Verbrennungsmotors (54) einer Anzahl Einspritzungen durchzuführen.

10. Computerprogramm mit Programmcodemitteln, um alle Schritte eines Verfahrens nach einem der Ansprüche 1 bis 7 durchzuführen, wenn das Computerprogramm auf einem Computer oder einer entsprechenden Recheneinheit, insbesondere in einer Vorrichtung (44) nach Anspruch 8, ausgeführt wird.

11. Computerprogrammprodukt mit Programmcodemitteln, die auf einem computerlesbaren Datenträger gespeichert sind, um alle Schritte eines Verfahrens nach einem der Ansprüche 1 bis 6 durchzuführen, wenn das Computerprogramm auf einem Computer oder einer entsprechenden Recheneinheit, insbesondere in einer Vorrichtung (44) nach Anspruch 8, ausgeführt wird.

## Claims

1. Method for performing a number of injections for at least one cylinder (52) of an internal combustion engine (54), in which, for the at least one cylinder (52), a setpoint time (18) for a start of actuation of an injection is obtained, and a target time (22) for the start of actuation is determined from the setpoint time (18) plus a delay time (16), wherein a function for monitoring the internal combustion engine (54) reacts to a delayed start of actuation, wherein in order to perform a test of the function a delay is brought about in a targeted fashion in order to prove that the function reacts correctly, wherein an injection is performed at the target time (22).

2. Method according to Claim 1, with which the function for monitoring operation of the internal combustion engine (54) is activated.

3. Method according to Claim 1 or 2, in which the start of actuation is shifted while inputting a command which is provided for this purpose.

4. Method according to one of the preceding claims, in which a setpoint actuation duration is used for an actuation duration.

5. Method according to one of the preceding claims, in which a duration of the delay time (16) is set.

6. Method according to one of the preceding claims, in which the setpoint time (18) is calculated as a function of an angle relative to a top dead centre for an injection which is to be performed.

7. Method of testing a function of an injection system of an internal combustion engine, in which at least one injection is performed by means of a method according to one of the preceding claims.

8. Device which is designed to perform a number of injections for at least one cylinder (52) of an internal combustion engine (54) and in the process to obtain, for the at least one cylinder (52), a setpoint time (18) for a start of actuation of an injection and to determine a target time (22) for the start of actuation from the setpoint time (18) plus a delay time (16), wherein a function for monitoring the internal combustion engine (54) reacts to a delayed start of actuation, wherein in order to perform a test of the function, a delay is brought about in a targeted fashion in order to prove that the function reacts correctly, and wherein the device (54) performs an injection at the target time (22).

9. Arrangement for testing a function of an injection system of an internal combustion engine (54), which arrangement has at least one device (44) according to Claim 8, which device (44) is designed to perform a number of injections for at least one cylinder (52) of an internal combustion engine (54).

10. Computer program with computer code means for performing all the steps of a method according to one of Claims 1 to 7, when the computer program is run on a computer or a corresponding computer device, in particular in a device (44) according to Claim 8.

11. Computer program product with program code means which are stored on a computer-readable data carrier for performing all the steps of a method according to one of Claims 1 to 6 when the computer program is run on a computer or a corresponding computer device, in particular in a device (44) according to Claim 8.

## Revendications

1. Procédé pour effectuer un certain nombre d'injections pour au moins un cylindre (52) d'un moteur à combustion interne (54), dans lequel un instant théorique (18) est déterminé pour un début de la commande d'une injection pour l'au moins un cylindre (52) et un instant cible (22) est déterminé pour le début de la commande à partir de l'instant théorique (18) en plus d'un temps de retard (16), dans lequel une fonction de surveillance du moteur à combustion interne (54) réagit à un début de commande retardé, dans lequel un retard est spécifiquement provoqué pour effectuer un test de la fonction, afin de montrer que la fonction réagit correctement, dans lequel une injection est effectuée à l'instant cible (22).

2. Procédé selon la revendication 1, au moyen duquel la fonction de surveillance d'un fonctionnement du moteur à combustion interne (54) est activée.

3. Procédé selon la revendication 1 ou 2, dans lequel un décalage du début de la commande est effectué par fourniture en entrée d'une instruction prévue à cet effet.

4. Procédé selon l'une quelconque des revendications précédentes, dans lequel une durée de commande théorique est utilisée en tant que durée de commande.

5. Procédé selon l'une quelconque des revendications précédentes, dans lequel une durée du temps de retard (16) est réglée.

6. Procédé selon l'une quelconque des revendications précédentes, dans lequel l'instant théorique (18) est calculé en fonction d'un angle par rapport à un point mort haut pour une injection devant être effectuée.

7. Procédé pour tester une fonction d'un système d'injection d'un moteur à combustion interne, dans lequel au moins une injection est effectuée par un procédé selon l'une quelconque des revendications précédentes.

8. Dispositif conçu pour effectuer, pour au moins un cylindre (52) d'un moteur à combustion interne (54), un certain nombre d'injections et pour ainsi déterminer, pour l'au moins un cylindre (52), un instant théorique (18) pour un début de la commande d'une injection et pour déterminer un instant cible (22) pour le début de la commande à partir de l'instant théorique (18) en plus d'un temps de retard (16), dans lequel une fonction de surveillance du moteur à combustion interne (54) réagit à un début de commande retardé, dans lequel un retard est spécifiquement provoqué pour effectuer un test de la fonction, afin de montrer que la fonction réagit correctement, et dans lequel le dispositif (54) effectue une injection à l'instant cible (22).

9. Dispositif destiné à tester une fonction d'un système d'injection d'un moteur à combustion interne (54), comportant au moins une dispositif (44) selon la revendication 8, qui est conçu pour effectuer un certain nombre d'injections pour au moins un cylindre (52) d'un moteur à combustion interne (54).

10. Programme d'ordinateur comportant des moyens à code de programme, destiné à exécuter toutes les étapes d'un procédé selon l'une quelconque des revendications 1 à 7, lorsque le programme d'ordinateur est exécuté sur un ordinateur ou sur une unité de calcul correspondante, notamment dans un dispositif (44) selon la revendication 8.

11. Produit de programme d'ordinateur comportant des moyens à code de programme qui sont stockés sur un support de données lisible par ordinateur, afin d'exécuter toutes les étapes d'un procédé selon l'une quelconque des revendications 1 à 6, lorsque le programme d'ordinateur est exécuté sur un ordinateur ou sur une unité de calcul correspondante, notamment dans un dispositif (44) selon la revendication 8.
